# FASCICULE DE BREVET EUROPEEN

(11) **EP 3 814 068 B1**
(45) Date de publication et mention de la délivrance du brevet: **13.04.2022**
(21) Numéro de dépôt: 19790589.6
(22) Date de dépôt: 07.06.2019
(51) Int. Cl.: B25J 9/06, B25J 5/00, B25J 19/02

(54) **ROBOT MOBILE D'INSPECTION D'UNE TURBOMACHINE**
MOBILER ROBOTER ZUR INSPEKTION EINER TURBOMASCHINE
MOBILE ROBOT FOR INSPECTING A TURBOMACHINE

(30) Priorité: 12.06.2018 FR 1855127
(43) Date de publication de la demande: 05.05.2021
(73) Titulaire: SAFRAN AIRCRAFT ENGINES, 75015 Paris (FR)
(72) Inventeur: LEPAGE, Thomas, Jean, Michel, 77550 Moissy-Cramayel (FR)
(74) Mandataire: Cabinet Beau de Loménie
(86) Numéro de dépôt international: PCT/FR2019/051391
(87) Numéro de publication internationale: WO 2019/239046

(56) Documents cités:
- WO-A1-2012/042921
- CN-A- 106 272 542
- US-A1- 2015 107 485
- US-A1- 2015 375 276
- EDWIN DERTIEN ET AL: "Development of an inspection robot for small diameter gas distribution mains", ROBOTICS AND AUTOMATION (ICRA), 2011 IEEE INTERNATIONAL CONFERENCE ON, IEEE, 9 mai 2011 (2011-05-09), pages 5044-5049, XP032033900, DOI: 10.1109/ICRA.2011.5980077 ISBN: 978-1-61284-386-5

## Description

### Arrière-plan de l'invention

L'invention s'inscrit dans le domaine des techniques d'inspection de pièces mécaniques, notamment des pièces de moteurs, par exemple des aubes d'une turbomachine d'aéronef. Plus précisément, l'invention porte sur un outil robotisé d'assistance à l'endoscopie interne de turbomachines.

De nombreuses pièces de moteurs sont critiques, leur rupture étant susceptible d'avoir des répercussions graves sur l'ensemble du système, par exemple sur l'aéronef. Pour pallier ces risques, de nombreuses opérations d'endoscopie sont menées dans des turbines d'aéronefs durant des phases d'essai ou de maintenance. Ces opérations d'inspection peuvent représenter en pratique jusqu'à environ 20% du temps total des phases de certains essais.

Les outils d'endoscopie actuels sont couramment constitués d'une sonde optique qui est placée au bout d'une canne rigide ou semi-flexible et qui renvoie en direct sa prise de vue sur un écran de contrôle. Dans l'exemple d'une turbomachine, la canne est maniée par un opérateur pour pouvoir accéder aux zones internes du moteur via des trous d'endoscopie ménagés le long de la turbomachine. Celui-ci utilise alors l'image disponible sur l'écran pour se repérer dans l'espace et guider l'endoscope.

Au cours des opérations d'inspection, l'opérateur peut être néanmoins confronté à plusieurs difficultés. En effet, les moteurs modernes sont plus difficiles d'accès et l'intégration toujours plus compacte de ceux-ci rend les trous endoscopiques difficiles d'accès pour l'opérateur, qui doit alors manipuler ses outils dans des postures peu ergonomiques.

Compte tenu de la compacité de ces moteurs, les zones internes d'une turbomachine à inspecter présentent des chemins d'accès de plus en plus complexes. A titre d'exemple, les générateurs de gaz sont de plus en plus compacts et de nouvelles zones à inspecter tels des redresseurs de turbines nécessitent une très grande longueur de canne endoscopique. Cette longueur de câble à insérer dans des trous d'endoscopie représente couramment la moitié du périmètre de l'étage de turbomachine à inspecter, et implique un guidage lent et complexe du câble par l'opérateur, celui-ci étant amené à cheminer entre divers obstacles compte tenu de l'étroitesse des espacements entre les pièces de la turbomachine.

Un autre type d'outil d'inspection couramment employé se présente sous la forme d'un robot de type serpent, qui est également inséré dans un trou d'endoscopie. Le serpent robotisé est constitué de segments successifs articulés en porte à faux qui permettent au robot de se mouvoir dans la turbomachine. Néanmoins, ce type de solution s'avère également limitée en termes de conception. Une fois encore, compte tenu de la complexité des chemins d'accès et des distances à parcourir dans la turbomachine, il est nécessaire de réaliser un outil présentant une longueur significative. L'augmentation de la longueur de cet outil conduit à une augmentation de sa masse, nécessitant l'ajout de renforts de structures impactant une fois encore la masse du robot. Une telle solution s'avère donc particulièrement complexe à mettre en œuvre en termes de compromis masse/longueur, implique couramment une masse totale importante et est complexe à manipuler par l'opérateur.

Par ailleurs, les exigences drastiques de disponibilité des aéronefs rendent les erreurs de diagnostic lors des inspections endoscopiques très coûteuses. Le manque de répétabilité des outils de mesure actuels, très dépendants de l'opérateur, augmente le risque de mauvais diagnostic des turbomachines et limite les possibilités de retour d'expérience, et donc d'amélioration continue. Ces dernières années ont notamment vu émerger des outils de diagnostic intelligents pour évaluer l'état de santé des moteurs. Ces outils utilisent des modèles statistiques et physiques qui nécessitent un grand nombre de données pour prédire l'état de santé des moteurs. Les données endoscopiques représentent donc un potentiel important pour ces outils de diagnostics. Cependant, les outils d'inspection actuels étant dépendants de la manipulation de l'opérateur, les données de diagnostic manquent de répétabilité et sont difficilement valorisables. Dans ce contexte, il serait souhaitable pour les équipementiers d'obtenir des données de diagnostic répétables et exploitables afin d'améliorer la qualité des diagnostics et fournir des données interopérables avec les modèles de diagnostic actuels. Les documents WO 2012/042921 et CN 106 272 542 divulguent un robot mobile d'inspection comprenant plusieurs segments rigides articulés.

### Objet et résumé de l'invention

La présente invention a pour but de remédier aux inconvénients précités.

A cet effet, l'invention propose un robot mobile d'inspection d'une turbomachine comprenant au moins un dispositif de mesure et un corps comportant un assemblage d'au moins trois segments rigides qui présentent chacun deux extrémités longitudinales, les extrémités longitudinales de chaque segment étant équipées d'une articulation comportant une rotule, chaque rotule comprenant une roue motorisée montée autour, le dispositif de mesure étant monté sur une rotule située à une extrémité longitudinale du corps.

Avantageusement, le robot mobile décrit ci-dessus présente des dimensions miniaturisées et une faible masse. Il peut ainsi facilement s'insérer dans des trous d'endoscopie d'un moteur, se déplacer entre deux pales d'un étage de rotor ou de stator d'une turbomachine via ses roues motorisées, passer d'un étage à un autre, acquérir et transmettre des mesures et/ou des prises de vues à l'intérieur de la turbomachine via le ou les dispositifs de mesures. En pratique, les outils d'inspection de l'état de l'art sont difficilement insérables dans des espacements étroits, doivent souvent contourner ceux-ci et éviter de se cogner entre des parois. A l'inverse, le robot mobile proposé ici tire profit d'espaces étroits entre deux surfaces pour se déplacer par adhérence via ses roues motorisées. Ce robot mobile permet en outre d'obtenir des mesures facilement répétables par l'opérateur, qui pourra au cours de futures inspections positionner le robot dans les mêmes conditions que lors d'inspections précédentes. Les données obtenues sont donc hautement valorisables, notamment dans l'utilisation de modèles statistiques de diagnostic des moteurs. Le robot décrit ci-dessus fournit donc une complémentarité et une interopérabilité vis-à-vis des outils de diagnostic existants.

Dans un exemple de réalisation, les extrémités longitudinales de chaque segment présentent un profil en forme de biseau.

Dans un exemple de réalisation, le robot mobile d'inspection comprend en outre un système de mise en tension des rotules, configuré pour déplacer les segments et ledit au moins un dispositif de sonde entre une première configuration dans laquelle les segments et le dispositif de mesure sont alignés et une deuxième configuration dans laquelle chaque segment présente avec ledit au moins un segment voisin ou avec ledit au moins un dispositif de mesure un angle inférieur à 180°.

Dans un exemple de réalisation, ledit au moins un dispositif de mesure comprend au moins une caméra, une sonde laser et/ou une sonde à ultrasons.

Dans un exemple de réalisation, le robot mobile d'inspection comprend deux dispositifs de mesure situés chacun à une extrémité longitudinale opposée du corps.

Dans un exemple de réalisation, les roues motorisées sont des roues universelles ou des roues mécanum.

Dans un exemple de réalisation, ledit au moins un dispositif de mesure présente des dimensions inférieures à la longueur de chaque segment.

L'invention propose également un système d'inspection comprenant un robot d'inspection tel que décrit ci-dessus, le système comprenant en outre une unité de contrôle comprenant un module de commande configuré pour commander le déplacement et l'articulation du robot mobile selon les trois dimensions de l'espace et un module de réception configuré pour réceptionner des mesures issues dudit au moins un dispositif de mesure.

Dans un exemple de réalisation, le système d'inspection comprend
- une liaison filaire interconnectant le robot mobile et l'unité de contrôle, la liaison filaire étant configurée pour acheminer un signal de commande du robot mobile issu depuis le module de commande au robot mobile et acheminer un signal de mesure depuis ledit au moins un dispositif de mesure au module de réception, et
- un dérouleur avec gestion de mou configuré pour dérouler la liaison filaire en fonction d'un signal de commande de l'unité de contrôle.

L'invention propose également un procédé d'inspection d'une turbomachine mettant en œuvre le système d'inspection résumé ci-dessus, le procédé comprenant les étapes suivantes :
- une étape d'insertion du robot mobile dans un trou d'endoscopie ménagé dans la turbomachine ;
- une étape de positionnement du robot mobile entre deux pales d'un étage de rotor ou de stator de la turbomachine ;
- une étape de mise en tension du robot mobile ;
- une étape de mise en rotation des rotors de la turbomachine ;
- une étape d'inspection par ledit au moins un dispositif de mesure des pales en regard du robot mobile durant l'étape de mise en rotation.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1 illustre de manière schématique une vue de côté d'un robot mobile dans une première configuration selon un mode de réalisation ;
- la figure 2 illustre une vue en perspective du robot mobile de la figure 1 dans une deuxième configuration selon un mode de réalisation ;
- la figure 3 illustre une vue simplifiée d'un système d'inspection comprenant le robot mobile selon un mode de réalisation ;
- la figure 4 illustre une vue partielle d'un étage de rotor et de stator d'une turbomachine inspectés par le robot mobile selon un mode de réalisation ;
- la figure 5 illustre un agrandissement de deux pales de la figure 4 entre lesquelles est disposé le robot mobile.

### Description détaillée de modes de réalisation

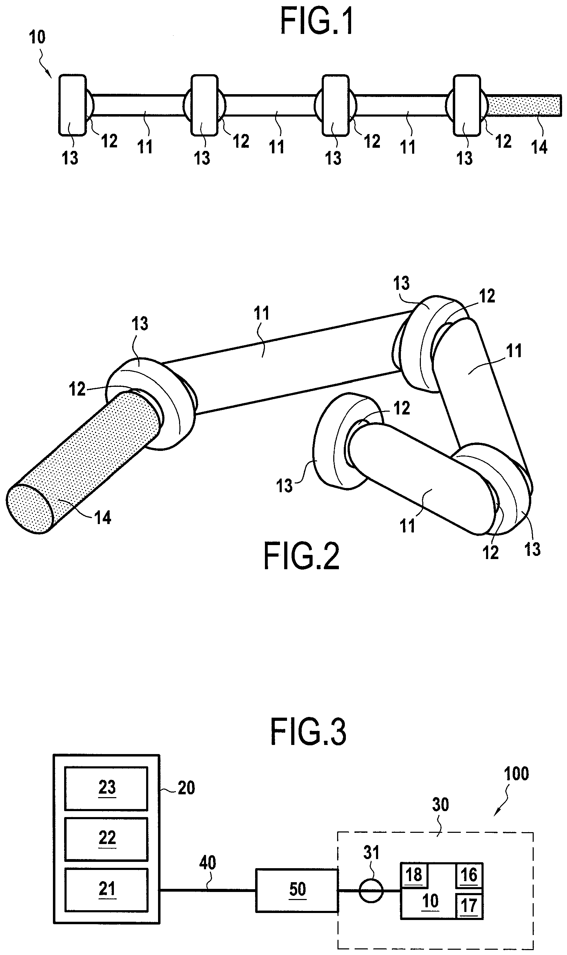

Les figures 1 et 2 illustrent selon un mode de réalisation un robot mobile 10 respectivement dans une première et une deuxième configuration.

Comme il sera vu plus loin, le robot mobile 10 est notamment destiné à l'inspection des pièces d'une turbomachine, par exemple l'inspection des pales d'une turbine haute pression ou basse pression dans une turbomachine d'aéronef. Cependant, il est entendu que le robot mobile 10 qui va être décrit peut être utilisé dans le cadre d'autres applications, par exemple pour inspecter des pièces de moteur comportant des trous, ou encore des surfaces internes d'un conduit.

Le robot mobile 10 comprend un corps comportant un assemblage d'au moins trois segments rigides 11. Les segments 11 rigides peuvent être creux et présenter une forme cylindrique ou tronconique. Dans l'exemple illustré sur la figure 2, chaque segment 11 rigide est un cylindre de révolution, cependant toute autre forme de cylindre droit, ou toute autre forme tronconique, pourrait être envisagée. Chaque longueur de segment 11 du robot mobile est choisie en adéquation avec l'environnement à inspecter. A titre d'exemple, pour l'inspection d'un étage de turbine, chaque longueur de segment 11 est choisie en adéquation avec les dimensions des pales de cet étage de turbine. Typiquement, la longueur de chaque segment 11 est inférieure à 1cm. Chaque segment 11 rigide comporte deux extrémités longitudinales opposées, chaque extrémité longitudinale de chaque segment 11 rigide étant équipée d'une articulation qui comporte une rotule articulée 12. Une roue motorisée 13 est montée autour de chaque rotule articulée 12. Dans les modes de réalisations illustrés sur les figures 1 et 2, les roues motorisées 13 sont réalisées sous la forme de roues universelles permettant au robot mobile 10 de se déplacer selon les trois dimensions de l'espace. Cependant, afin de faciliter les déplacements du robot mobile 10, d'autres types de roues connues de l'homme du métier peuvent être envisagées, par exemple des roues mécanum ou des roues holonomes. Ces types de roues présentent en effet pour avantage de proposer un déplacement selon l'ensemble des dimensions de l'espace sans nécessiter de manœuvres complexes, facilitant ainsi le pilotage du robot mobile 10 par un opérateur.

Au moins un dispositif de mesure 14 est par ailleurs associé à une extrémité longitudinale libre d'un des segments rigides 11 du robot mobile 10. Ainsi, sur les figures 1 et 2 un dispositif de mesure 14 est associé à une rotule 12 d'un des segments rigides 11. Plus précisément, le dispositif de mesure 14 est montée sur une rotule 12 située à une des extrémités longitudinales du corps du robot mobile 10. Dans un autre mode de réalisation non-illustré, un deuxième dispositif de mesure 14 peut être associé à une autre extrémité longitudinale libre d'un des segments rigides 11. Autrement dit, deux dispositifs de mesure 14 sont alors séparés par le corps du robot mobile 10, s'étendent dans le prolongement de celui-ci et sont chacun situés à une de ses extrémités longitudinales. Chaque dispositif de mesure 14 peut comprendre un ou plusieurs outils de mesure, par exemple une caméra, une sonde laser, une sonde à infrarouge, une sonde à ultrasons, et/ou plus généralement tout type de moyen de contrôle non destructif. Afin de faciliter le déplacement du robot mobile 10, chaque dispositif de mesure 14 est en outre réalisé de manière à présenter des dimensions inférieures à la longueur de chaque segment 11 rigide du robot mobile 10.

Sur la figure 1, le robot mobile 10 est dans une première configuration rectiligne et « désarticulée » : dans cette configuration les rotules 12 ne sont pas mises en tension, les segments rigides 11 et le dispositif de mesure 14 sont alors alignés. Cette configuration peut avantageusement être utilisée afin de permettre l'insertion du robot mobile 10 dans un trou d'endoscopie. Un trou d'endoscopie présentant en pratique un diamètre inférieur à 1cm, les diamètres respectifs du dispositif de mesure 14 ainsi que des segments rigides 11 sont dimensionnés pour être inférieurs à 1cm. La figure 2, illustre une deuxième configuration « articulée » du robot mobile 10. Dans cette deuxième configuration, les rotules 12 sont mise en tension via une force de rappel élastique de manière à ce que chaque segment 11 rigide présente avec au moins un segment voisin, ou avec le dispositif de mesure 14, un angle inférieur à 180°. Les configurations du robot mobile 10 peuvent être commandées par un système de mise en tension 16, configuré pour autoriser ou non la mise en tension des rotules 12 et donc commander le déplacement de chaque segment 11rigide. La mise en tension des rotules 12 peut à titre d'exemple être réalisée par enroulement d'un câble élastique, ou encore par l'utilisation d'un ressort à mémoire de forme.

Dans l'exemple illustré sur la figure 2, afin de permettre le déplacement des segments rigides 11 lorsque les rotules 12 sont mises en tension, chaque extrémité longitudinale de chaque segment 11 rigide présente une forme de biseau. L'utilisation de cylindres creux pour former chaque segment 11 rigide permet quant à elle l'intégration dans ces segments de moyens d'alimentation électrique et de commande (ex : via une ou plusieurs liaisons filaires) pour les roues motorisées 13 et pour le dispositif de mesure 14, et éventuellement l'intégration de moyens d'acheminement des signaux de mesures réalisées par chaque dispositif de mesure 14.

Les signaux précités, et éventuellement des signaux de commande, de mesures ou d'alimentations électriques supplémentaires, peuvent être acheminés depuis une unité de contrôle 20 externe illustrée sur la figure 3. On a représenté sur cette figure un système d'inspection 100 d'un moteur 30 à l'aide du robot mobile 10. Le robot mobile a ici été inséré dans le moteur 30 via un trou d'endoscopie 31. Dans l'exemple illustré, une liaison filaire 40 passant par le trou d'endoscopie 31 interconnecte le robot mobile 10 et l'unité de contrôle 20.

L'unité de contrôle 20 comprend un module de commande 21 configuré pour commander le déplacement du robot mobile 10 selon les trois dimensions de l'espace, via une commande de ses roues motorisées 13, et son articulation via une commande de mise en tension des rotules 12. Les signaux associés à ces commandes peuvent être transmis via la liaison filaire 40. Ces signaux de commande résultent des interactions d'un opérateur avec une interface homme machine 23 constitutive de l'unité de contrôle 20, en vue de piloter le robot mobile 10 et en fonction de sa position dans le moteur 30. La position du robot mobile 10 dans le moteur 30 peut être évaluée à partir d'un système de guidage 17 embarqué, par exemple à l'aide d'une centrale inertielle intégrée dans les segments rigides 11 creux. En fonction des informations de position, vitesse et accélération du robot, du couple mesuré sur chaque roue motorisée 13 et des mesures du ou des dispositifs de mesures 14, un algorithme intégré à l'unité de contrôle 20 permet alors d'assurer le bon déplacement du robot en cohérence avec la demande de l'opérateur. L'unité de contrôle 20 peut également commander l'activation d'une source lumineuse 18 intégrée au robot mobile 10, ou transmettre par une fibre optique constitutive de la liaison filaire 40 une source lumineuse issue de l'unité de contrôle 20.

L'unité de contrôle 20 comprend en outre un module de réception 22 configuré pour réceptionner les mesures du ou des dispositifs de mesure 14 via la liaison filaire 40, par exemple via une fibre optique. Les résultats de ces mesures (ex : données, images) et les informations de localisation du robot mobile 10 peuvent être affichées en direct sur un écran associé à l'interface homme machine 23, afin de permettre à l'opérateur de piloter le robot et contrôler les données (ex : localisation du robot, qualité des données obtenues, prise en compte d'obstacles visibles sur les images re tournées par une caméra).

Un dérouleur 50 motorisé est par ailleurs positionné sur le moteur 30 et est configuré pour dérouler (ou enrouler) la liaison filaire 40 en fonction des signaux de commande issus du module de commande 21 de l'unité de contrôle 20. Le dérouleur 50 est un dérouleur avec gestion de mou, c'est-à-dire qu'il contrôle le mou de la liaison filaire 40. Cette gestion de mou peut à titre d'exemple être réalisée par un limiteur de mou (non-illustré) intégré à l'unité de contrôle et configuré pour s'activer sélectivement afin de donner lors de périodes temporelles sélectionnés du mou à la liaison filaire 40. La liaison filaire 40 interconnectant le robot mobile 10 et l'unité de contrôle 20, la gestion du mou de la liaison filaire 40 permet avantageusement un déplacement précis du robot mobile 10 tout en limitant les contraintes de tension que serait susceptible d'exercer la liaison filaire 40 sur celui-ci. Toute contrainte de tension de la liaison filaire 40 risquant d'impacter le déplacement du robot mobile 10 se voit ainsi écartée, aussi bien durant le déroulement que durant l'enroulement de la liaison filaire 40.

La liaison filaire 40 peut par ailleurs, si besoin, fournir un signal d'alimentation électrique au robot mobile 20. Une liaison filaire est ici décrite pour la transmission des signaux de commande et de mesures entre l'unité de contrôle 20 et le robot mobile 10, mais bien entendu une liaison sans fil remplissant les mêmes fonctions pourrait être utilisée, notamment si le robot mobile 10 possède une source d'alimentation électrique embarquée. Dans ce dernier cas, l'utilisation d'un dérouleur 50 n'est pas nécessaire.

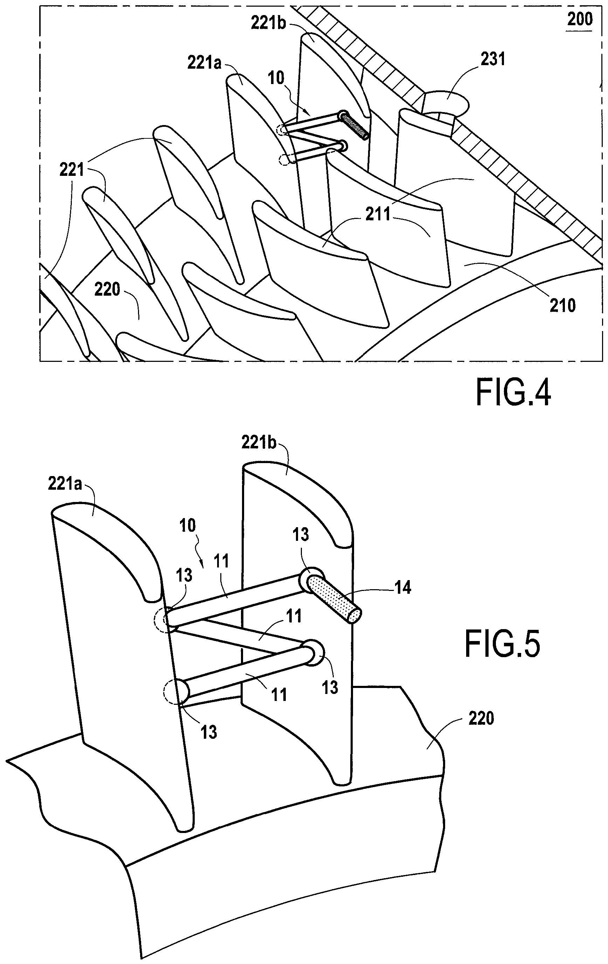

Les figures 4 et 5 illustrent un exemple d'application du robot mobile 10, utilisé ici pour l'inspection des aubes 211 constitutives d'un étage de rotor 210, et/ou des aubes 221 constitutives d'un étage de stator 220 d'une turbomachine d'aéronef 200. Le procédé d'inspection est le suivant.

Tout d'abord, l'opérateur commande via l'unité de contrôle 20 le robot mobile 10 dans la première configuration (voir figure 1), c'est-à-dire dans une configuration rectiligne. Cette première configuration permet à l'opérateur d'insérer facilement le robot mobile 10 dans un trou d'endoscopie 231 ménagé dans la turbomachine 200. Si le robot mobile est interconnecté via une liaison filaire 40 à une unité de contrôle 20, une partie de la liaison filaire 40 est également insérée dans le trou d'endoscopie 231.

Le robot mobile 10 est ensuite positionné entre deux pales, ici deux pales 221a, 221b de l'étage de stator 220. Le robot mobile 10 est alors commandé pour être mis en tension via ses rotules 12 dans la deuxième configuration. Comme expliqué plus haut, dans cette deuxième configuration, le système de mise en tension 16 commande la mise en tension élastique des rotules 12 en autorisant l'application d'une force de rappel élastique. La figure 5 illustre un agrandissement des pales 221a, 221b du stator 220 de la figure 4. Comme il peut être vu sur cette figure, les rotules 12 exercent dans la deuxième configuration une force de rappel conduisant à une articulation des segments rigides 11, conférant ainsi au robot mobile 10 une flexibilité. Sous l'effet de la force de rappel des rotules 12, les roues motorisées 13 viennent alors prendre appui entre une première surface de la pale 221a et une seconde surface de la pale 221b, par exemple entre une surface extrados et une surface intrados de ces pales. La force de friction exercée par les roues motorisée 13 sur les surfaces des pales 221a, 221b permet alors le maintien du robot mobile 10 entre celles-ci, et garantit l'adhérence du robot aux pales lors de ses déplacements selon les trois dimensions de l'espace. Afin de permettre l'insertion du robot mobile entre les pales 10, les longueurs des segments rigides 11 sont préalablement choisies de manière à être inférieures à la hauteur des pales 221a, 221b, et les diamètres des roues motorisées 13 et des segments rigides 11 sont choisis de manière à être inférieurs à l'espacement existant entre les pales 221a, 221b. A titre d'exemple, les segments rigides 11 peuvent présenter un diamètre inférieur à 1cm et les roues motorisées 13 un diamètre inférieur à 1cm. Ainsi, compte-tenu de sa compacité, le robot mobile 10 est apte à circuler entre deux étages successifs de stator et de rotor, en prenant par exemple appui entre les surfaces de deux pales consécutives.

Afin d'inspecter les pales 211 de l'étage de rotor 210, les rotors de la turbomachine 200 sont ensuite mis en rotation sur 360°, et le dispositif de mesure 14 inspecte (ex : prises d'images, mesures) les pales 211 en regard du stator 220 durant cette étape de mise en rotation. L'ensemble des pales 211 du rotor 210 sont ainsi inspectées selon une même prise de vue. De même, afin d'inspecter l'ensemble des pales 221 de l'étage de stator 220, l'opérateur peut piloter le déplacement du robot mobile 10, qui reste toujours dans la deuxième configuration, de manière à ce que les roues mobiles 13 viennent prendre appui entre deux pales 211 du rotor 210. Les rotors de la turbomachine 200 sont ensuite mis en rotation sur 360° et le dispositif de mesure 14 inspecte durant cette étape les pales 221 du stator 220 en regard du rotor 10. Par ailleurs, durant la rotation du stator 220 et en cas de l'utilisation d'une liaison filaire 40 (non-présente dans l'exemple illustré), l'unité de contrôle 20 commande le dérouleur 50 de manière à dérouler la liaison en adéquation avec la rotation de la turbomachine 200, prévenant ainsi tout risque éventuel de mouvement du robot mobile 10 et/ou de coincement la liaison filaire 40. La commande du déroulement ou de l'enroulement de la liaison filaire 40 comprend par ailleurs, comme expliqué plus haut, la gestion du mou de celle-ci afin de prévenir toute contrainte de tension qui risquerait d'impacter le déplacement du robot mobile 10. La friction des roues motorisées 13 sur les surfaces des pales demeure par ailleurs suffisante durant la rotation des rotors de la turbomachine pour maintenir fixe le robot entre deux pales. Par ailleurs, grâce au système de guidage 17, l'unité de contrôle 20 peut connaitre à tout moment la position du robot mobile 10, et peut en fonction de cette position autoriser ou interdire la rotation des rotors de la turbomachine 200 afin de prévenir toute mauvaise manipulation de l'opérateur. Le risque de casse éventuel du robot mobile 10 se voit ainsi minimisé.

Les opérations d'inspection décrites ci-dessus peuvent être répétées pour chaque étage de rotor et/ou de stator de la turbomachine 200. Une fois les opérations d'inspection terminées, le ré-enroulement de la liaison filaire 40 autour du dérouleur 50 est commandée par l'unité de contrôle 20. Le robot mobile 10 est ensuite de nouveau commandé par l'opérateur dans la première configuration, la mise en tension élastique des rotules 12 étant alors désactivée suite à cette demande. Ainsi, le robot mobile 10 reprend une forme rectiligne et l'opérateur extrait celui-ci via le trou d'endoscopie 231. La mise en œuvre d'une liaison filaire 40 peut par ailleurs ici constituer une sécurité supplémentaire en cas de panne éventuelle du robot mobile 10, le robot étant alors extirpable par simple traction mécanique de la liaison filaire 40.

Avantageusement, le robot mobile 10 décrit ci-dessus présente des dimensions miniaturisées et une faible masse. Il peut ainsi facilement s'insérer dans des trous d'endoscopie 31 d'un moteur 30, se déplacer entre deux pales d'un étage de rotor ou de stator via ses roues motorisées 13, passer d'un étage à un autre, se repérer dans le moteur 30 grâce à son système de guidage 17 embarqué, éclairer les zones à inspecter, acquérir et transmettre des mesures et/ou des prises de vues depuis l'intérieur du moteur 30 via le ou les dispositifs de mesures 14. Alors que les outils d'inspection de l'état de l'art sont difficilement insérables dans des espacements étroits et doivent souvent contourner ceux-ci afin d'éviter de se cogner entre des parois, le robot mobile 10 décrit ci-dessus tire profit de l'espacement étroit entre deux surfaces, par exemple d'un espacement inter-pales, pour se déplacer par adhérence via ses roues motorisées 13. Avantageusement, la faible masse du robot mobile 10 ainsi que les forces de frottements des roues motorisées 13 permettent alors à ce dernier de ne pas bouger malgré la mise en rotation d'un rotor. L'intérieur d'un moteur comporte couramment des pales qui possèdent des rayons de courbures et des vrillages importants. Le robot mobile 10 décrit ci-dessus permet avantageusement via la mise en tension des rotules 12 de s'adapter à l'environnement rencontré sans affecter sa motricité. Enfin, grâce au système de guidage 17 du robot mobile 10, le maintien du robot mobile 10 entre deux surfaces permet d'obtenir des mesures localisées qui sont facilement répétables par l'opérateur. L'opérateur pourra ainsi au cours de futures inspections positionner le robot mobile 10 dans les mêmes conditions que lors d'inspections précédentes. Les données obtenues sont donc hautement valorisables, notamment pour leur utilisation dans des modèles statistiques/physiques de diagnostic des moteurs. Le robot mobile 10 décrit ci-dessus assure donc une bonne complémentarité et interopérabilité vis-à-vis des outils de diagnostic existants.

## Revendications

1. Robot mobile (10) d'inspection d'une turbomachine (30, 200) comprenant au moins un dispositif de mesure (14) et un corps comportant un assemblage d'au moins trois segments (11) rigides présentant chacun deux extrémités longitudinales opposées, **caractérisé en ce que** les extrémités longitudinales de chaque segment (11) sont équipées d'une articulation comportant une rotule (12), chaque rotule (12) comprenant une roue motorisée (13) montée autour, le dispositif de mesure (14) étant monté sur une rotule (12) située à une extrémité longitudinale du corps.

2. Robot mobile (10) d'inspection selon la revendication 1, dans lequel les extrémités longitudinales de chaque segment (11) présentent un profil en forme de biseau.

3. Robot mobile (10) d'inspection selon la revendication 1 ou 2, comprenant en outre un système de mise en tension (16) des rotules (12), configuré pour déplacer les segments (11) et ledit au moins un dispositif de mesure (14) entre une première configuration dans laquelle les segments (11) et le dispositif de mesure (14) sont alignés et une deuxième configuration dans laquelle chaque segment (11) présente avec ledit au moins un segment (11) voisin ou avec ledit au moins un dispositif de mesure (14) un angle inférieur à 180°.

4. Robot mobile (10) d'inspection selon l'une quelconque des revendications 1 à 3, dans lequel ledit au moins un dispositif de mesure (14) comprend au moins une caméra, une sonde laser et/ou une sonde à ultrasons.

5. Robot mobile (10) d'inspection selon l'une quelconque des revendications 1 à 4, comprenant deux dispositifs de mesure (14) situés chacun à une extrémité longitudinale opposée du corps.

6. Robot mobile (10) d'inspection selon l'une quelconque des revendications 1 à 5, dans lequel les roues motorisées (13) sont des roues universelles ou des roues mécanum.

7. Robot mobile (10) selon l'une quelconque des revendications 1 à 6, dans lequel ledit au moins un dispositif de mesure (14) présente des dimensions inférieures à la longueur de chaque segment (11).

8. Système d'inspection (100) comprenant un robot mobile (10) d'inspection selon l'une quelconque des revendications 1 à 7, le système (100) comprenant en outre une unité de contrôle (20) comprenant un module de commande (21) configuré pour commander le déplacement et l'articulation du robot mobile (10) selon les trois dimensions de l'espace et un module de réception (22) configuré pour réceptionner des mesures issues dudit au moins un dispositif de mesure (14).

9. Système d'inspection (100) selon la revendication 8, comprenant :
- une liaison filaire (40) interconnectant le robot mobile (10) et l'unité de contrôle (20), la liaison filaire (40) étant configurée pour acheminer un signal de commande du robot mobile (10) issu depuis le module de commande (21) au robot mobile (10) et acheminer un signal de mesure depuis ledit au moins un dispositif de mesure (14) au module de réception (22), et
- un dérouleur (50) avec gestion de mou configuré pour dérouler la liaison filaire (40) en fonction d'un signal de commande de l'unité de contrôle (20).

10. Procédé d'inspection d'une turbomachine (30, 200) mettant en œuvre un système d'inspection (100) selon l'une quelconque des revendications 8 à 9, le procédé comprenant les étapes suivantes :
- une étape d'insertion du robot mobile (100) dans un trou d'endoscopie (31, 231) ménagé dans la turbomachine (30, 200) ;
- une étape de positionnement du robot mobile (200) entre deux pales (211, 221, 221a, 221b) d'un étage de rotor (210) ou de stator (220) de la turbomachine (30, 200) ;
- une étape de mise en tension du robot mobile (10) ;
- une étape de mise en rotation des rotors de la turbomachine (30, 200) ;
- une étape d'inspection par ledit au moins un dispositif de mesure (14) des pales (211, 221, 221a, 221b) en regard du robot mobile (10) durant l'étape de mise en rotation.

## Patentansprüche

1. Mobiler Roboter (10) zur Inspektion einer Turbomaschine (30, 200) mit mindestens einer Messvorrichtung (14) und einem Körper, der eine Anordnung aus mindestens drei starren Segmenten (11) umfasst, die jeweils zwei gegenüberliegende Längsenden aufweisen, **dadurch gekennzeichnet, dass** die Längsenden jedes Segments (11) mit einem Gelenk ausgestattet sind, das ein Kugelgelenk (12) umfasst, wobei jedes Kugelgelenk (12) ein um dieses herum montiertes motorisiertes Rad (13) umfasst, wobei die Messvorrichtung (14) an einem Kugelgelenk (12) montiert ist, das sich an einem Längsende des Körpers befindet.

2. Mobiler Inspektionsroboter (10) nach Anspruch 1, wobei die Längsenden jedes Segments (11) ein schräg verlaufendes Profil aufweisen.

3. Mobiler Inspektionsroboter (10) nach Anspruch 1 oder 2, ferner umfassend ein System zum Spannen (16) der Kugelgelenke (12), das so konfiguriert ist, dass es die Segmente (11) und die mindestens eine Messvorrichtung (14) zwischen einer ersten Konfiguration, in der die Segmente (11) und die Messvorrichtung (14) ausgerichtet sind, und einer zweiten Konfiguration, in der jedes Segment (11) mit dem mindestens einen benachbarten Segment (11) oder mit der mindestens einen Messvorrichtung (14) einen Winkel von weniger als 180° bildet, bewegt.

4. Mobiler Inspektionsroboter (10) nach einem der Ansprüche 1 bis 3, wobei die mindestens eine Messvorrichtung (14) mindestens eine Kamera, eine Lasersonde und/oder eine Ultraschallsonde umfasst.

5. Mobiler Inspektionsroboter (10) nach einem der Ansprüche 1 bis 4, umfassend zwei Messvorrichtungen (14), die sich jeweils an einem gegenüberliegenden Längsende des Körpers befinden.

6. Mobiler Inspektionsroboter (10) nach einem der Ansprüche 1 bis 5, wobei die angetriebenen Räder (13) Universalräder oder Mecanum-Räder sind.

7. Mobiler Roboter (10) nach einem der Ansprüche 1 bis 6, wobei die mindestens eine Messvorrichtung (14) Abmessungen aufweist, die kleiner sind als die Länge jedes Segments (11).

8. Inspektionssystem (100) umfassend einen mobilen Inspektionsroboter (10) nach einem der Ansprüche 1 bis 7, wobei das System (100) ferner eine Steuereinheit (20) mit einem Steuermodul (21), das so konfiguriert ist, dass es die Bewegung und die Artikulation des mobilen Roboters (10) gemäß den drei Dimensionen des Raums steuert, und mit einem Empfangsmodul (22), das so konfiguriert ist, dass es Messungen von der mindestens einen Messvorrichtung (14) empfängt, umfasst.

9. Inspektionssystem (100) nach Anspruch 8, umfassend:
- eine Drahtverbindung (40), die den mobilen Roboter (10) und die Steuereinheit (20) miteinander verbindet, wobei die Drahtverbindung (40) so konfiguriert ist, dass sie ein Steuersignal des mobilen Roboters (10) von dem Steuermodul (21) zu dem mobilen Roboter (10) leitet und ein Messsignal von der mindestens einen Messvorrichtung (14) zu dem Empfangsmodul (22) leitet, und
- einen Abwickler (50) mit Durchhangmanagement, der so konfiguriert ist, dass er die Drahtverbindung (40) in Abhängigkeit von einem Steuersignal von der Steuereinheit (20) abwickelt.

10. Verfahren zur Inspektion einer Turbomaschine (30, 200), bei dem ein Inspektionssystem (100) nach einem der Ansprüche 8 bis 9 eingesetzt wird, wobei das Verfahren die folgenden Schritte umfasst:
- einen Schritt des Einführens des mobilen Roboters (100) in ein Endoskopieloch (31, 231), das in der Turbomaschine (30, 200) ausgebildet ist;
- einen Schritt des Positionierens des mobilen Roboters (200) zwischen zwei Schaufelblättern (211, 221, 221a, 221b) einer Rotorstufe (210) oder einer Statorstufe (220) der Turbomaschine (30, 200);
- einen Schritt zum Spannen des mobilen Roboters (10);
- einen Schritt, bei dem die Rotoren der Turbomaschine (30, 200) in Drehung versetzt werden;
- einen Schritt der Inspektion durch die mindestens eine Messvorrichtung (14) der Schaufelblätter (211, 221, 221a, 221b) gegenüber dem mobilen Roboter (10) während des Schritts des Versetzens in Drehung.

## Claims

1. A mobile robot (10) for inspecting a turbomachine (30, 200) comprising at least a measuring device (14) and a body including an assembly of at least three rigid segments (11) each having two opposite longitudinal ends, **characterized in that** the longitudinal ends of each segment (11) are equipped with a hinge including a ball joint (12), each ball joint (12) comprising a motorized wheel (13) mounted therearound, the measuring device (14) being mounted on a ball joint (12) located at a longitudinal end of the body.

2. The mobile inspection robot (10) according to claim 1, wherein the longitudinal ends of each segment (11) have a bevel-shaped profile.

3. The mobile inspection robot (10) according to claim 1 or 2, further comprising a system for tensioning (16) the ball joints (12), configured to move the segments (11) and said at least one measuring device (14) between a first configuration in which the segments (11) and the measuring device (14) are aligned and a second configuration in which each segment (11) has with said at least one adjacent segment (11) or with said at least one measuring device (14) an angle less than 180°.

4. The mobile inspection robot (10) according to any one of claims 1 to 3, wherein said at least one measuring device (14) comprises at least a camera, a laser probe and/or an ultrasound probe.

5. The mobile inspection robot (10) according to any one of claims 1 to 4, comprising two measuring devices (14) each located at an opposite longitudinal end of the body.

6. The mobile inspection robot (10) according to any one of claims 1 to 5, wherein the motorized wheels (13) are universal wheels or Mecanum wheels.

7. The mobile inspection robot (10) according to any one of claims 1 to 6, wherein said at least one measuring device (14) has dimensions smaller than the length of each segment (11).

8. An inspection system (100) comprising a mobile inspection robot (10) according to any one of claims 1 to 7, the system (100) further comprising a monitoring unit (20) comprising a control module (21) configured to control the movement and the hinge of the mobile robot (10) according to the three spatial dimensions and a receiving module (22) configured to receive measurements obtained from said at least one measuring device (14).

9. The inspection system (100) according to claim 8, comprising:
- awired connection (40) interconnecting the mobile robot (10) and the monitoring unit (20), the wired connection (40) being configured to convey a control signal of the mobile robot (10) coming from the control module (21) to the mobile robot (10) and to convey a measurement signal from said at least one measuring device (14) to the receiving module (22), and
- an unwinder (50) with slack management configured to unwind the wired connection (40) according to a control signal of the monitoring unit (20).

10. A method for inspecting a turbomachine (30, 200) implementing an inspection system (100) according to any one of claims 8 to 9, the method comprising the following steps:
- a step of inserting the mobile robot (100) into an endoscopic hole (31, 231) arranged in the turbomachine (30, 200);
- a step of positioning the mobile robot (200) between two blades (211, 221, 221a, 221b) of a rotor (210) or stator (220) stage of the turbomachine (30, 200);
- a step of tensioning the mobile robot (10);
- a step of rotating the rotors of the turbomachine (30, 200);
- a step of inspecting, by said at least one measuring device (14), the blades (211, 221, 221a, 221b) facing the mobile robot (10) during the rotating step.
